# EUROPÄISCHE PATENTSCHRIFT

(11) **EP 3 104 299 B1**
(45) Veröffentlichungstag und Bekanntmachung des Hinweises auf die Patenterteilung: **10.08.2022**
(21) Anmeldenummer: 16168000.4
(22) Anmeldetag: 03.05.2016
(51) Int. Cl.: G06K 1/12, G06K 19/06

(54) **ERSTELLUNG VON MARKEN IN DER VORSTUFE EINES DRUCKPROZESSES**
CREATION OF MARKS IN THE PRELIMINARY STAGE OF A PRINTING PROCESS
PRODUCTION DE MARQUES A UN STADE PRELIMINAIRE D'UN PROCESSUS D'IMPRESSION

(30) Priorität: 09.06.2015 DE 102015210491
(43) Veröffentlichungstag der Anmeldung: 14.12.2016
(73) Patentinhaber: Heidelberger Druckmaschinen AG, 69115 Heidelberg (DE)
(72) Erfinder: Schramek, Edmund, 74889 Sinsheim (DE); Schmitt, Hans-Peter, 69151 Neckargemünd (DE); Schenk, Stefan, 69257 Wiesenbach (DE)

(56) Entgegenhaltungen:
- EP-A1- 0 993 947
- EP-A2- 2 565 816
- DE-A1- 10 345 290
- US-A1- 2010 147 960
- US-A1- 2014 367 464

## Beschreibung

Die vorliegende Erfindung betrifft ein Verfahren zur Erstellung von Marken durch einen Rechner in der Vorstufe eines Druckprozesses.

Die Erfindung liegt in dem technischen Gebiet der elektronischen Reproduktionstechnik.

Bei der Durchführung von Druckaufträgen ist es aus Gründen der Qualitätssicherung notwendig, auf das Drucksubstrat, neben dem eigentlich zu druckenden Druckbild, bestimmte Arten von Marken von platzieren. Diese Marken werden für Prozesse zur Qualitätssicherung benötigt und zudem lassen sich mit ihnen auch druckauftragsspezifische Informationen über den Druckauftrag von der Druckvorstufe auf das eigentliche Drucksubstrat übertragen. Diese Marken umfassen dabei in der Hauptsache Passermarken, welche aus dem englischen Sprachraum auch als Registermarken bekannt sind und insbesondere im Mehrfarbendruck für die Kontrollen des passergenauen Übereinanderdruckens der verschiedenen Druckfarben notwendig sind. Die Passer- oder Registermarken haben dabei üblicherweise die Form von kleinen Kreuzen. Bei dem Auftragen jeder Druckfarbe wird dieses kleine Kreuz in der jeweiligen Druckfarbe aufgebracht. Auftretende Abweichungen in der Lage des Druckbildes zwischen den einzelnen aufgebrachten Druckfarben lassen sich dann anhand von Abweichungen in den übereinander gedruckten kreuzförmigen Passermarken leicht identifizieren.

Die Passer- oder Registermarken können auch andere Formen annehmen, z. B. ist es aus dem Stand der Technik bekannt, die Passermarken in Form von Barcodes oder Matrixcodes zu gestalten, wodurch Informationen über den Druckauftrag auf das Druckbild übertragen werden können.

So ist aus der Patentanmeldung DE 000010345290 A1 eine Vorrichtung zur Erfassung von Passermarken bekannt, wobei die Passermarken von Matrix-Codes gebildet sind, welche mittels einer Kamera zur Positionierung und Identifikation eines Arbeitsmediums erfassbar sind.

Ein weiterer, aus dem Stand der Technik bekannter Markentyp, ist die Farbmessmarke. Mittels Farbmessmarken wird kontrolliert wird, ob die gedruckten, aus dem Drucksubstrat resultierenden Farben die korrekten Farbwerte aufweisen. Üblicherweise bestehen sie aus Sammlungen jeweils gleich großer Farbmessfelder, in denen alle verwendeten Druckfarben plus die möglichen, resultierenden Farbkombinationen in entsprechender Abstufung, abgedruckt sind. Ob alle möglichen Farbkombinationen oder nur ein Teil verwendet wird, hängt von der gewünschten Kontrollschärfe ab. Die Farbmessfelder werden nach dem Druck mittels Kameras oder eines Spektrometers erfasst und die gemessenen Werte mit den zu erwartenden Werten abgeglichen.

Die Koordination über die Art, Anzahl, Position und Größe der betreffenden Marken wird dabei von der jeweils benutzten Druckvorstufe des Druckprozesses übernommen. Für diese Druckvorstufe ist es aus dem Stand der Technik bekannt, Workflowsysteme zu verwenden, die als computergestützte Software den kompletten Druckauftrag von der Auftragserstellung durch den Kunden bis zur Erstellung der detaillierten Druckauftragsdaten für die Druckmaschine reichen. Auch die Überwachung des Druckprozesses in der Druckmaschine und die Verarbeitung etwaiger auftretender Qualitätsprobleme werden vom Workflowsystem mit übernommen. Beispiele für ein solches vollständiges Workflowsystem sind z. B. die verschiedenen Ausführungen des Prinect-Systems der Heidelberger Druckmaschinen AG.

Das Erstellen und Positionieren der für die Durchführung des Druckauftrages notwendigen Marken wird dabei vom Workflowsystem automatisiert übernommen, unterliegt jedoch auch der Kontrolle und bei Bedarf der manuellen Veränderung durch den Anwender des Workflowsystems.

Die US-Patentanmeldung US 0 2014 036 7464 A1 offenbart ein Verfahren zur Barcode-Erzeugung und-integration in Verpackungsmaterial, wo für einen finalen Barcode, dessen Informationen noch nicht gänzlich bekannt sind, ein Platzhalter mit Positionsinformationen eingesetzt wird, welcher dann im Vorstufensystem des Druckprozesses durch den dort erzeugten finalen Barcode ersetzt wird. Hier geht es jedoch nicht um die Erzeugung von für die Durchführung des Druckauftrages notwendigen Marken.

Die US-Patentanmeldung US 0 2010 014 7960 A1 wiederum offenbart ein Verfahren zum Erzeugen und Drucken von Barcodes, wo der finale Barcode durch eine Barcode-Repräsentation aus bestimmten Zeichen ersetzt wird. Auch hier geht es nicht um die Erzeugung von für die Durchführung des Druckauftrages notwendigen Marken

Zudem offenbart die Patentanmeldung DE 102011112232 A1, Barcodes während eines Workflows anzupassen, indem dieser jeweils neu erzeugt wird. Hierfür müssen alle Informationen über den Barcode besorgt und die Seite neu erzeugt werden.

Aus der Offenlegungsschrift DE 103 45 290 A1 geht eine Vorrichtung zur Erfassung von Passermarken hervor, welche in Form von Matrix-Codes gebildet sind. Dabei enthält der Matrix-Code ein als L-förmigen Balken ausgebildetes Finder-Element, welches als Bezugsgröße zu Positionierzwecken geeignet ist.

Die europäische Patentanmeldung EP 0 993 947 A1 betrifft ein Verfahren zur optischen Erfassung einer Druckposition oder eines Registerfehlers zwischen einzelnen Farben beim Mehrfarbendruck in einer Druckmaschine. Dabei können im Randbereich sogenannte Blockmarken aufgedruckt werden, welche in Form eines Barcodes gestaltet sind und zur schnellen und möglichst makulatursparenden Einrichtung der für den Druck benötigten unterschiedlichen Farben verwendeten Druckzylinder vorgesehen sind.

In der Praxis kommt es jedoch häufig vor, dass insbesondere kleinere Druckereien über kein vollständiges Workflowsystem à la Prinect verfügen. Dort ist die Vorstufe meist in zwei Bereiche geteilt: Der Kunde erstellt mit seiner eigenen Software, die von eigener Bildbearbeitungssoftware bis hin zu kommerzieller Druckauftragssoftware reichen kann, seinen Druckauftrag. In diesen Druckauftragsdaten sind die Lage und Position der zu druckenden Bildobjekte sowie Textstellen festgehalten und mehr oder weniger genau spezifiziert. Falls der Kunde bereits eine kommerzielle, d. h. professionelle Software für die Erstellung eines Druckauftrages verwendet, so wird diese in der Regel auch bereits entsprechende Marken in die Druckauftragsdaten einsetzen und platzieren. Die Druckauftragsdaten werden dann vom Kunden an die ausführende Druckerei weitergereicht. Dabei ergibt sich das Problem, dass die Vorstufensoftware des Kunden noch nicht alle notwendigen Informationen, die zur Erstellung der Marken notwendig sind, besitzt. Der Grund hierfür ist, dass sie nicht wissen kann, wie und von welchen Druckmaschinen, mit welcher Konfiguration der Druckauftrag später in der Druckerei ausgeführt wird.

Ein weiteres großes Problem ist oft, dass, selbst wenn alle notwendigen Informationen vorhanden wären, die Vorstufensoftware beim Kunden Marken verwendet, die die Vorstufensoftware in der Druckerei nicht kennt oder nicht verarbeiten kann. Die beiden Workflowsysteme sind also inkompatibel.

In beiden Fällen erhält die Vorstufensoftware in der Druckerei Druckauftragsdaten mit Marken, die sie nicht verwenden kann. Ein Setzen der Marken komplett in der Vorstufensoftware der Druckerei ist dagegen oft schwierig, da ein Positionieren der Marken per Automatik in diesen späteren Prozessstufen des Druckprozesses zu riskant ist und eine manuelle Positionierung aufgrund der eigentlichen Arbeitsaufgabe des Druckers in der Druckerei und der technischen Rahmenbedingungen dort oft nicht praktikabel umsetzbar ist.

Die Aufgabe der vorliegenden Erfindung ist es daher, ein Verfahren zur Erstellung von Marken in der Vorstufe eines Druckprozesses zu offenbaren, welches die Übertragung von Informationen über die Platzierung von Marken von einem ersten Teil der Vorstufe zu einem nachfolgenden Teil der Vorstufe, d. h. von einer Workflowsoftware zur nächsten Workflowsoftware, ermöglicht.

Die erfindungsgemäße Lösung dieser Aufgabe stellt ein Verfahren gemäß Anspruch 1 dar.

Mit Hilfe dieses Verfahrens ist es möglich, zwei verschiedene Workflowsysteme zur Erstellung eines Druckauftrages zu verwenden, wie sie beim Szenario von inkompatibler Vorstufensoftware zwischen Kunde und Druckerei auftreten kann.

Die erste, erstellende Applikation, in diesem Fall also das Workflowsystem beim Kunden, setzt dabei an die Stelle, wo eigentlich die benötigten Marken gesetzt werden, einen Platzhalter, welcher genau die Größe der eigentlichen Marke besitzt, ein. Dadurch, dass dieser Platzhalter an genau der Position und mit genau der Größe der eigentlichen Marke erstellt wird, sind somit die beiden wichtigsten Platzierungsinformationen für die Marke, nämlich Größe und Position, bereits festgehalten und stehen bei der Übermittlung der Druckauftragsdaten an das zweite Workflowsystem in der Druckerei diesem zur Verfügung. Dabei ist es nicht zwangsläufig notwendig, dass es sich bei den beiden Workflowsystemen um ein Workflowsystem beim Kunden und ein Anderes in einer Druckerei handelt. Es sind auch Szenarien denkbar, wo innerhalb einer Druckerei oder bei einem Kunden zwei verschiedene, miteinander inkompatible Workflowsysteme verwendet werden. Auch für diese Szenarien ist das offenbarte Verfahren anwendbar.

Die Verwendung eines Informationen beinhaltenden Codes hat mehrere Vorteile. Neben den Positionsinformationen und den Informationen über die Größe der später einzufügenden Marken, können in den Matrixcode auch bestimmte auftragsspezifische Informationen kodiert werden. Dies können z. B. Maschinenparameter für die zu verwendenden Maschinen sein, Angaben zum Auftraggeber oder die Auftragsnummer. Die Verwendung eines Matrixcodes, insbesondere eines QR-Codes, hat zudem den Vorteil, dass diese Code-Arten besonders leicht bei einem Scan des Dokumentes erkannt werden können. Als Alternative zur Verwendung eines Matrixcodes kann auch ein Barcode verwendet werden. Auch weitere Formen von Codes zur Informationsübertragung, welche die geometrische Form eines Platzhalters für die zu ersetzenden Marken bilden können, sind möglich.

Die Hauptaufgabengebiete der eingesetzten benötigten Marken sind Farbmess- oder Registermarken. D. h. Marken, mit welchen das passergenaue Übereinanderdrucken verschiedener Farbauszüge kontrolliert wird oder auch Farbmessmarken, mit welchen kontrolliert wird, ob die gedruckten, aus dem Drucksubstrat resultierenden Farben die korrekten Farbwerte aufweisen.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass in dem Matrix- oder Barcode weitere druckauftragsspezifische Informationen kodiert sind. Wie bereits erwähnt enthalten die verwendeten Codes Informationen über den aktuellen Druckauftrag.

Ein Teil des erfindungsgemäßen Verfahrens ist dabei, dass die erste, erstellende Applikation eine Vorstufendatei erstellt, in welcher die neutralen Platzhalter platziert sind, und diese Vorstufendatei der zweiten, anwendenden Applikation übermittelt wird.

Die Art der Informationsübertragung zwischen den beiden Arten der Vorstufensoftware, d. h. den beiden Workflowsystemen, wird in Form einer Datei umgesetzt. So wird in der ersten Vorstufensoftware der Druckauftrag mit allen notwendigen und soweit bekannten Informationen erstellt, und die so gesammelten Daten bezüglich verwendeter Bildobjekte und Textstellen, sowie die Platzhalter für die späteren Marken werden in einer Datei abgespeichert. Das Format dieser Datei ist dabei abhängig von der verwendeten Art des ersten Workflowsystems. Die Datei wird nun an das zweite Workflowsystem übermittelt, wobei dies über das Internet, in Form eines Datenträgers oder jede andere Art von Netzwerk geschehen kann. Das zweite Workflowsystem, als erstellende und anwendende Applikation, analysiert diese Vorstufendatei und setzt die darin enthaltenen Druckauftragsdaten als Druckauftrag um. Bezüglich der Marken und deren Platzhalter, welche durch das erste Workflowsystem in Form der ersten, erstellenden Applikation gesetzt worden sind, scannt die zweite Applikation die Vorstufendatei nach diesen Platzhaltern, analysiert die Größe und Position der Platzhalter für die Marken und ersetzt die Platzhalter im Wissen um die Informationen des Druckauftrages und die zur Umsetzung zur Verfügung stehenden Druckmaschinen durch die entsprechend passenden Marken.

Eine weitere bevorzugte Weiterbildung des erfindungsgemäßen Verfahrens ist dabei, dass die zweite, anwendende Applikation um ein Softwaremodul ergänzt wird, welches die Vorstufendatei nach den dort platzierten neutralen Platzhaltern scannt und die in den Platzhaltern enthaltenen Informationen über die zu erstellenden Marken der zweiten, anwendenden Applikation zur Verfügung gestellt.

Da die zweite, anwendende Applikation, also das zweite Workflowsystem, im Normalfall aufgrund der Inkompatibilität zwischen beiden Systemen nicht von Haus aus über die Fähigkeiten zum Suchen und Ersetzen der Platzhalter durch die benötigten Marken verfügt, wird ein Softwaremodul benötigt, welches das zweite Workflowsystem in die Lage hierzu versetzt. Das Softwaremodul wird üblicherweise als Plug-in realisiert und muss so in das zweite Workflowsystem integriert oder mit diesem verbunden werden, dass es bei Zugriff auf die Vorstufendatei, welche vom ersten Workflowsystem erstellt wurde, diese Vorstufendatei scannt und die Informationen über die gefundenen Platzhalter dem zweiten Workflowsystem zur Verfügung stellt. Zudem müssen eventuell in den Platzhaltern kodierte Informationen entschlüsselt und ebenfalls an das zweite Workflowsystem weitergegeben werden.

Eine weitere bevorzugte Weiterbildung des erfindungsgemäßen Verfahrens ist dabei, dass die Vorstufendatei im PDF-Format gestaltet ist.

In der Druckindustrie sind Vorstufendateien meist als PDF-Dateien realisiert, wobei diese PDF-Dateien meist ein vorgegebenes Format besitzen. Dieses Format ist üblicherweise JDF (Job Definition File).

Eine weitere bevorzugte Weiterbildung des erfindungsgemäßen Verfahrens ist dabei, dass die Vorstufendatei mit den neutralen Platzhaltern als gerastertes Bild oder ungerastertes Halbtonbild umgesetzt ist.

Je nachdem, ob der Rasterimageprozessor, der für die Rasterung im Rahmen des Vorstufenprozesses zuständig ist, bereits im ersten Workflowsystem oder erst im zweiten Workflowsystem zum Einsatz kommt, kann die Vorstufendatei bereits als gerastertes Bild oder als noch ungerastertes Bild vorliegen.

Das Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben.

In den Zeichnungen sind einander entsprechende Elemente mit jeweils denselben Bezugszeichen versehen.

Die Zeichnungen zeigen:
- Figur 1: ein Beispiel einer Passermarke,
- Figur 2: ein Beispiel einer Farbmessmarke,
- Figur 3: ein Beispiel eines Bar- bzw. eines QR-Codes,
- Figur 4: den Aufbau des Vorstufensystems mit zwei Workflowsystemen,
- Figur 5: den Ablauf des erfindungsgemäßen Verfahrens.

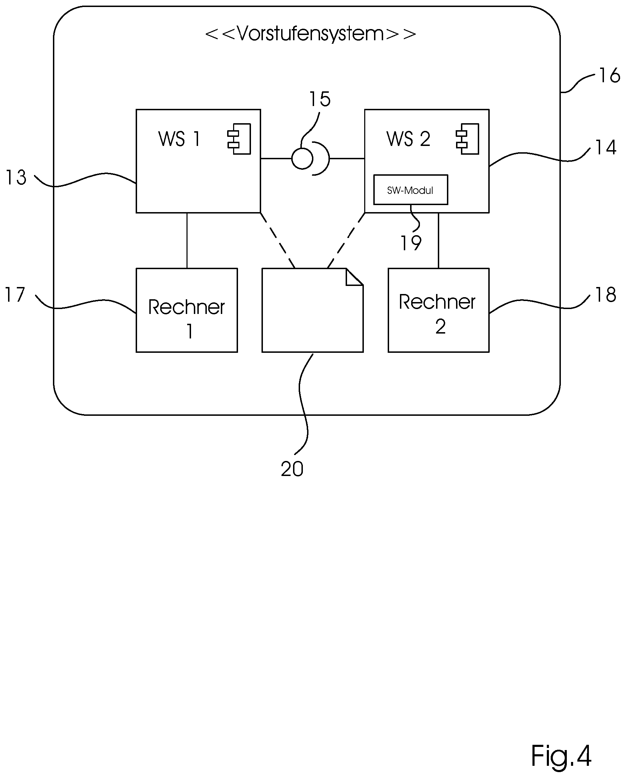

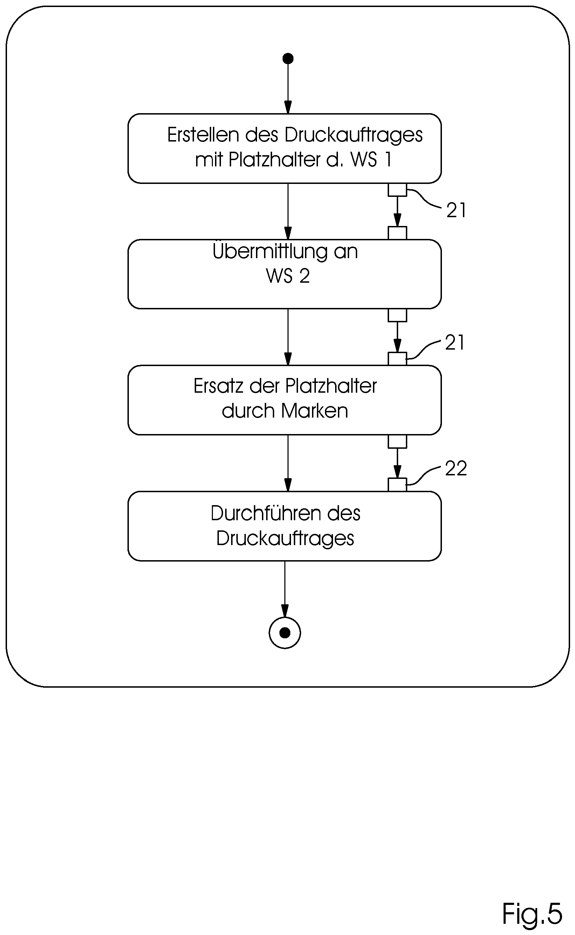

Der Aufbau des gesamten digitalen Vorstufensystems 16 ist schematisch in Figur 4 dargestellt. Der Ablauf des erfindungsgemäßen Verfahrens ist dagegen beispielhaft und schematisch in Figur 5 dargestellt.

Dabei wird vom ersten Workflowsystem 13, gemäß des Druckauftrages, vom Kunden an einem Rechner des ersten Workflowsystems 17 eine Vorstufendatei 20 erstellt und neben den eigentlichen Druckauftragsdaten, wie den Bildobjekten und Textfeldern, bestimmte Marken eingesetzt.

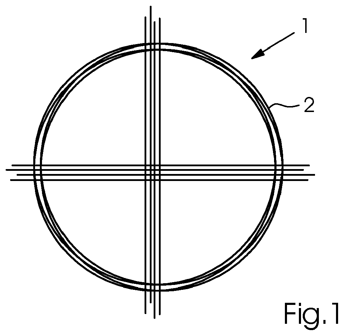

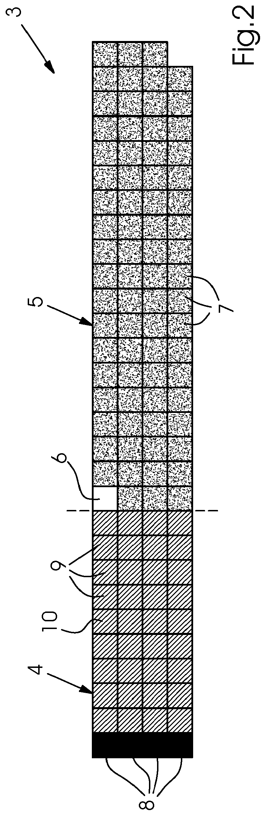

In Figur 1 ist ein Beispiel für eine solche Marke, in diesem Fall eine Passermarke 1, dargestellt. Die Abweichungen 2 in den übereinander gedruckten kreuzförmigen Passermarken, verursacht durch Abweichungen 2 in der Lage des Druckbildes zwischen den einzelnen aufgebrachten Druckfarben, sind hier gut zu erkennen. Passermarken 1 ermöglichen damit die Kontrolle des passergenauen Übereinanderdrucks mehrerer Druckauszüge. Figur 2 dagegen zeigt das Beispiel einer Farbmessmarke 3. Die Farbmessmarken 3 werden zur Qualitätskontrolle der resultierenden Farbwerte in Form von Testelementen 3 auf dem Drucksubstrat verwendet. Sie bestehen aus einzelnen Farbfeldern 10, welche aus den verwendeten Farben bestehen. Meist sind die Farbfelder in zwei Teilbereichen 4, 5 eingeteilt. Im ersten Teilbereich 4 stehen Tonwertfarbfelder 9 aus jeweils einer der verwendeten Farben in unterschiedlicher Rasterung. Diese reichen von Volltonfarbfeldern 8 bis zu komplett weißen Farbfeldern 6. Im zweiten Bereich 5 stehen gemischte Farbfelder 7, welche Kombinationen der verwendeten Farben, ebenfalls mit unterschiedlichen Rasterungswerten, untereinander enthalten.

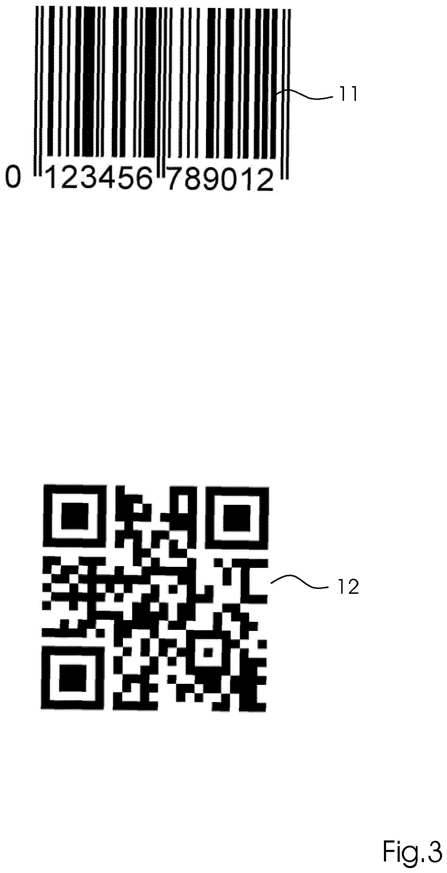

Da zu diesem Zeitpunkt des Vorstufenprozesses das erste Workflowsystem 13 noch nicht sämtliche notwendigen Informationen zur Erstellung aller benötigten Marken 1, 3 für den eigentlichen Druck besitzt, werden entsprechende Platzhalter eingesetzt. Diese Platzhalter können z. B. die Form eines Barcodes 11 oder eines Matrixcodes, insbesondere eines QR-Codes 12, haben. Beispiele für einen Barcode 11 oder einen solchen QR-Code 12 sind in Figur 3 dargestellt. Mit diesen Codes 11, 12 können weitere auftragsspezifische Informationen an das zweite Workflowsystem 14 übermittelt werden. In einer besonders bevorzugten Ausführungsvariante werden als Platzhalter stets QR-Codes 12 verwendet, da diese nicht nur die Möglichkeit bieten darin Informationen zu speichern, welche ja auch ganz normal in der Vorstufendatei 20 gespeichert werden können, sondern vor allem, da die QR-Codes 12 aufgrund ihrer geometrischen Form besonders leicht beim Scannen der Vorstufendatei 20 zu erkennen sind.

Die Platzhalter werden nun an genau den Stellen eingesetzt, wo bereits bekannt ist, dass Marken benötigt werden. Die Vorstufendatei 20 enthält nun neben den eigentlichen Druckauftragsdaten Platzhalter für alle Marken 1,3, welche das erste Workflowsystem 13 nicht setzen konnte. Die so erstellte Vorstufendatei 21 im JDF-Format wird dann an das zweite Workflowsystem 14 übermittelt. Da eine Kompatibilität zwischen den Interfaces des ersten und zweiten Workflowsystems 15 nicht angenommen werden kann, beinhaltet das zweite Workflowsystem 14 ein Softwaremodul 19 in Form eines Plug-in, welches die Vorstufendatei 21 nach den Platzhaltern scannt, die darin enthaltenen Informationen über Position, Größe und Druckauftragsdaten registriert und diese Informationen dem zweiten Workflowsystem 14 zur Verfügung stellt. Das SW-Modul 19 ist dabei bevorzugt in das zweiten Workflowsystem 14 integriert. Es ist jedoch auch möglich, dass in einer alternativen Ausführungsvariante das SW-Modul 19 als eigenständiges Programm auf dem Rechner des zweiten Workflowsystems 18 agiert und mit diesem zusammenarbeitet. Das zweite Workflowsystem 14 kann dann mit den so erhaltenen Informationen die benötigten Passer- und/oder Farbmessmarken 1, 3 erstellen und die Vorstufendatei 20 mit den fertigen Marken 1, 3 ergänzen. Die Vorstufendatei 22, welche nun nicht mehr die Platzhalter, sondern die benötigten Passer- und/oder Farbmessmarken 1, 3 enthält, wird anschließend zur Erledigung des Druckauftrages an die Druckmaschine geschickt.

### Bezugszeichenliste

- 1: Passermarke
- 2: Abweichungen der einzelnen Farbauszüge
- 3: Farbmessmarke/Testelement
- 4,5: Teilbereiche
- 6: weißes Farbfeld
- 7: gemischte Farbfelder
- 8: Volltonfarbfeld
- 9: Tonwertfarbfelder
- 10: Farbfeld
- 11: Barcode
- 12: QR-Code
- 13: erstes Workflowsystem
- 14: zweites Workflowsystem
- 15: Interface zwischen erstem und zweitem Workflowsystem
- 16: Digitale Vorstufe
- 17: Rechner des ersten Workflowsystems
- 18: Rechner des zweiten Workflowsystems
- 19: SW-Modul
- 20: Vorstufendatei
- 21: Vorstufendatei mit Platzhalter
- 22: Vorstufendatei mit fertigen Marken

## Patentansprüche

1. Verfahren zur Erstellung von Marken (1, 3) für die Einrichtung einer Druckmaschine durch einen Rechner (17, 18) in der Vorstufe (16) eines Druckprozesses,
wobei die Vorstufe (16) mindestens zwei separate Applikationen (13, 14) umfasst, die erste, erstellende Applikation (13) neutrale Platzhalter mit Informationen über Größe und Position für benötigte Marken (1, 3) erstellt, während die zweite, anwendende Applikation (14) die Platzhalter erkennt und durch die konkret benötigten Marken (1, 3) ersetzt,
**dadurch gekennzeichnet,**
**dass** der neutrale Platzhalter die Form eines Matrix-Codes, insbesondere eines QR-Codes (12), oder eines Bar-Codes (11) besitzt, wobei in dem Matrix- oder Bar-Code (11, 12) weitere, druckauftragsspezifische Informationen codiert sind und
die Marken (1, 3), welche von der zweiten, anwendenden Applikation (14) anstelle der neutralen Platzhalter erstellt werden, Farbmess- oder Registermarken (1, 3) sind.

2. Verfahren nach einem der vorherigen Ansprüche,
**dadurch gekennzeichnet,**
**dass** die erste, erstellende Applikation (13) eine Vorstufendatei (21) erstellt, in welcher die neutralen Platzhalter platziert sind und diese Vorstufendatei (21) der zweiten, anwendenden Applikation (14) übermittelt wird.

3. Verfahren nach dem Anspruch 2,
**dadurch gekennzeichnet,**
**dass** die zweite, anwendende Applikation (14) um ein Softwaremodul (19) ergänzt wird, welches die Vorstufendatei (21) nach den dort platzierten neutralen Platzhaltern scannt und die in den Platzhaltern enthaltenen Informationen über die zu erstellenden Marken (1, 3) der zweiten, anwendenden Applikation (14) zur Verfügung stellt.

4. Verfahren nach einem der vorherigen Ansprüche,
**dadurch gekennzeichnet,**
**dass** die Vorstufendatei (20) im PDF-Format gestaltet ist.

5. Verfahren nach einem der vorherigen Ansprüche,
**dadurch gekennzeichnet,**
**dass** die Vorstufendatei mit den neutralen Platzhaltern (21) als gerastertes Bild oder ungerastertes Halbtonbild umgesetzt ist.

## Claims

1. Method of creating marks (1, 3) for setting up a printing machine by means of a computer (17, 18) at the prepress stage (16) of a printing operation, wherein the prepress stage (16) comprises at least two separate applications (13, 14), wherein the first one is a creating application (13) for creating neutral wildcards with information on size and position of required marks (1, 3), and wherein the second one is an applying application (14) for recognizing the wildcards and replacing them with the specific required marks (1, 3),
**characterized**
**in that** the neutral wildcard has the form of a matrix code, in particular a QR code (12), or of a bar code (11), said matrix or bar code (11, 12) including encoded further print job-specific information, and in that the marks (1, 3) which have been created by the second, applying application (14) to replace the neutral wildcards are color measurement or register marks (1, 3).

2. Method according to claim 1,
**characterized**
**in that** the first, creating application (13) creates a prepress file (21) in which the neutral wildcards have been placed, and in that said prepress file (21) is transmitted to the second, applying application (14).

3. Method according to claim 2,
**characterized**
**in that** a software module (19) is added to the second, applying application (14) to scan the prepress file (21) for the neutral wildcards that have been placed therein and to make the information contained in the wildcards about the marks (1, 3) to be created available to the second, applying application (14).

4. Method according to any one of the preceding claims,
**characterized**
**in that** the prepress file (20) is in the PDF format.

5. Method according to any one of the preceding claims,
**characterized**
**in that** the prepress file with the neutral wildcards (21) is implemented as a screened halftone image or an unscreened halftone image.

## Revendications

1. Procédé permettant de créer des repères (1, 3) pour l'installation d'une machine d'impression par un ordinateur (17, 18) dans le prépresse (16) d'un processus d'impression, le prépresse (16) comprenant au moins deux applications séparées (13, 14), la première application (13), de création, créant des marques de réservation neutres avec des informations sur la taille et la position pour les repères (1, 3) nécessaires, tandis que la deuxième application (14), d'utilisation, reconnaît les marques de réservation et les remplace par les repères (1, 3) concrètement nécessaires,
**caractérisé en ce**
**que** la marque de réservation neutre se présente sous la forme d'un code matriciel, notamment d'un code QR (12), ou d'un code-barres (11), d'autres informations spécifiques au travail d'impression étant codées dans le code matriciel ou le code-barres (11, 12), et les repères (1, 3) qui sont créés par la deuxième application (14) d'utilisation à la place des marques de réservation neutres étant des repères de contrôle couleurs ou de registre (1, 3).

2. Procédé selon l'une des revendications précédentes,
**caractérisé en ce**
**que** la première application (13) de création crée un fichier de prépresse (21) dans lequel sont placés les caractères de remplacement neutres et que ce fichier de prépresse (21) est transmis à la deuxième application (14) d'utilisation.

3. Procédé selon la revendication 2,
**caractérisé en ce**
**que** la deuxième application (14) d'utilisation est complétée par un module logiciel (19) qui scanne le fichier de prépresse (21) pour y trouver les marques de réservation neutres qui y sont placées et qui met à la disposition de la deuxième application (14) d'utilisation les informations contenues dans les marques de réservation concernant les repères (1, 3) à créer.

4. Procédé selon l'une des revendications précédentes,
**caractérisé en ce**
**que** le fichier de prépresse (20) est au format PDF.

5. Procédé selon l'une des revendications précédentes,
**caractérisé en ce**
**que** le fichier de prépresse est converti avec les marques de réservation neutres (21) sous la forme d'une image tramée ou d'une image en demi-teintes non tramée.
